# EUROPEAN PATENT APPLICATION

(11) **EP 4 549 728 A1**
(43) Date of publication of application: **07.05.2025**
(21) Application number: 23207745.3
(22) Date of filing: 03.11.2023
(51) Int. Cl.: F03D 7/02, F03D 17/00

(54) **OPERATING A FLOATING WIND TURBINE**

(71) Applicant: Siemens Gamesa Renewable Energy A/S, 7330 Brande (DK)
(72) Inventor: Cavichioli Gonzaga, Carlos Alberto, 7100 Vejle (DK); Hoegh, Gustav, 7100 Vejle (DK); Laugesen, Kasper, 6700 Esbjerg (DK)
(74) Representative: SGRE-Association

(57) **Abstract**

A method of operating a floating wind turbine (FWT) is provided. The floating wind turbine (100) comprises a nacelle (105) and a rotor (101) mounted to the nacelle (105), wherein the floating wind turbine (100) is exposed to waves during operation, the waves causing a wave induced motion of the floating wind turbine (100). The floating wind turbine (100) is configured to operate a protective function (30). The method comprises obtaining wave information (17) indicative of the waves to which the floating wind turbine (100) is exposed and modifying the operation of the protective function (30) using the obtained wave information (17) to reduce an influence of the wave induced motion of the floating wind turbine (100) on the protective function (30).

## Description

### FIELD OF THE INVENTION

The present invention relates to a method of operating a floating wind turbine, wherein the floating wind turbine is configured to operate a protective function. It further relates to a control system for controlling the operation of a floating wind turbine and to a respective computer program.

### BACKGROUND

To install a wind turbine in deeper waters without the need for a tower structure or jacket fixed to the sea floor, it is known to use a floating wind turbine (FWT). Known types of floating wind turbines include wind turbines having a semi-submersible floater, a floating spar, a tension leg platform (TLP), or combinations of those. Mooring lines are used to moor the floating wind turbine at the installation site. Whereas moorings for semi-submersible and spar-type floating wind turbines have a certain slag that allows a certain degree of movement of the floating wind turbine, other types, such as a tension leg platform, suppress such movement.

It is generally required to detect a significant malfunction of such wind turbine and to take counter-measures. For this purpose, it is known to provide a wind turbine with a protective function that for example monitors accelerations of the floating wind turbine (e.g., nacelle acceleration), and that takes a respective mitigation action if the monitored parameter exceeds limits, such as shutting down the wind turbine. A shock or excessive vibration may for example be sensed, which may be due to a structural failure of a wind turbine component, such as of the blade. By detecting such shock or vibration and taking a respective mitigation action in due time, further damage to the wind turbine may be avoided. It may however be difficult to detect respective failure events for a floating offshore wind turbine. It is in particular desirable to reliably detect respective failures while at the same time avoiding unnecessary shut-downs, which may result in a loss of energy production. It is therefore desirable to improve the safety of a floating wind turbine while avoiding loss of energy production.

### SUMMARY

Accordingly, there is a need to mitigate at least some of the drawbacks mentioned above and to provide an improved method of operating a wind turbine that provides safe wind turbine operation while reducing loss of energy production.

This need is met by the features of the independent claims. The dependent claims describe embodiments of the invention.

According to an aspect, a method of operating a floating wind turbine (FWT) is provided. The FWT comprises a nacelle and a rotor mounted to the nacelle, wherein the FWT is exposed to waves during operation. The waves cause a wave-induced motion of the FWT. The FWT is configured to operate a protective function, wherein operating the protective function comprises obtaining a monitored parameter that is indicative of an acceleration of the nacelle, of a tower top, and/or of the rotor of the FWT and taking a mitigation action based on the obtained monitored parameter. The method comprises obtaining wave information that is indicative of waves to which the floating wind turbine is exposed and modifying the operation of the protective function using the obtained wave information so as to reduce an influence of the wave-induced motion of the FWT on the protective function.

By such method, an unnecessary triggering of the mitigation action, which may result in loss of energy production, may be avoided. In particular, it has been found that the sea state may have a significant impact on the monitored parameter obtained by the protective function, such as on a monitored acceleration. Peak-to-peak acceleration levels may be significantly higher in normal sea states than in calm water conditions, in particular due to the waves causing the FWT to move with the waves, which may result in significant accelerations of the tower top, nacelle and wind turbine rotor. As such accelerations may cause the protective function to trigger the mitigation action, the consideration of wave-induced motion, i.e. the consideration of the sea state, may significantly reduce the number of respective false alarms and thus of unnecessary shut-downs of the wind turbine. FWTs, which are generally located offshore, can in some situations only be re-started upon inspection of the wind turbine by service personnel, which may take a significant amount of time and may involve high costs. By avoiding such unnecessary shut-downs, the loss in energy production may therefore be reduced significantly.

The protective function may for example be modified repeatedly or continuously during operation of the wind turbine and during operation of the protective function. The modification may essentially occur in real-time. The current state of the sea and in particular respective wave information may thus be considered (e.g., real time and/or post-processed parameters based on a certain time period, e.g. between 1-15 min, such as 10 min), thereby improving operation of the protective function even if unpredictable and sudden changes to the sea state or weather conditions occur. It should be clear that no modification may be made if the sea state does not change.

The monitored parameter may for example be obtained by monitoring, in particular measuring, an acceleration, a tilting, a deflection, or any other operational parameter suitable to be used in the protective function. The monitored parameter is preferably an acceleration parameter. It may be derived from a measurement of any respective operational parameter which may optionally include processing one or more respective measurement signals.

In an embodiment, obtaining the wave information comprises obtaining measurements from a sensor mounted to the floating wind turbine and/or obtaining the wave information from an external source. A sensor mounted to the FWT is generally directly responsive to wave-induced motion of the FWT, thus providing reliable and real-time information on the current sea state. It should be clear that the wave information may be obtained from a respective sensor signal by any kind of signal processing, such as by applying a transfer function. By obtaining the wave information from an external source, the technical complexity may be reduced, as reliable information made available by other sources may be employed.

For example, obtaining the wave information may comprise one or a combination of obtaining measurements from a motion sensor mounted to the floating wind turbine, in particular mounted to a nacelle, a tower top, a floater, and/or a tower bottom of the floating wind turbine; obtaining measurements from a motion sensor mounted on a vessel, buoy, platform, or another wind turbine external to the wind turbine (e.g., from a wave buoy or from another wind turbine of the same wind park); obtaining wave information from a wave radar (which may be mounted to a FWT); and obtaining information on wave conditions from a weather service or monitoring service.

A motion sensor may for example be a position sensor (e.g., satellite-based, e.g. GNSS), an acceleration sensor, an inclinometer, an inertial measurement unit (IMU, e.g. a combination of a gyroscope and accelerometer), and/or a motion reference unit (MRU). A MRU may for example be a combination of a gyroscope, accelerometers and optionally a GNSS (global navigation satellite system) sensor and/or magnetometer. By using extended Kalman filter as post-processing, such MRU may be capable of outputting all 6 degrees of freedom in both positioning, velocity, and acceleration. Direct information on a wave-induced motion may thus be obtained. In particular, when mounted to the FWT, the movements of such FWT are mainly caused by the waves, thus facilitating identification of these movements.

The wave information may be a signal, such as a position signal or acceleration signal, obtained from a respective sensor, or may be information derived from such a sensor signal, such as wave height, sea state, or the like. Wave height may for example be obtained by processing a certain amount of data obtained from a respective sensor. Wave height may comprise one or a combination of different parameters, such as significant wave height, highest wave, average height of the highest 1/3 of the waves, or may be derived as an average difference in elevation for a certain period of time, or may be determined as an average difference in elevation for a certain number of waves. Sea state may include a raw parameter and/or instantaneous parameter related to waves experienced by the FWT, e.g. related to sea surface elevation. Obtaining respective measurement data from a sensor external to the wind turbine may have the advantage of allowing plural FWTs to obtain sensor data from one sensor, and may further provide a direct measurement of the sea state. Obtaining information from a weather service or monitoring service may have the advantage of not requiring the installation of a dedicated sensor on the FWT or external thereto. Sea state information obtained from a monitoring service may for example provide sufficient information on wave height, allowing the derivation of expected wave-induced motion of a floater of the FWT. A control system may for example comprise a communication connection via which it receives respective measurement data and/or wave information from an internal or external sensor or a respective external data source.

The wave information may be indicative of a wave induced motion of a floater of the floating wind turbine, of a sea state, and/or of a wave height. Obtaining the wave information may comprise estimating a sea state or wave height from a received measurement of motion of a floater of the floating wind turbine, and/or obtaining the wave information may comprise estimating a wave induced motion of a floater of the floating wind turbine (e.g., amplitude and/or acceleration) from a received sea state or a received wave height. Such obtaining of the wave information may facilitate reducing the influence of the wave-induced motion of the FWT on the protective function.

A respective measuring step may form part of the method. Preferably, obtaining wave information comprises at least measuring floater heave motion.

Optionally, a frequency spectrum of waves or of floater motion may be estimated from the wave information, e.g. from a measured floater motion, from a wave height derived from a measured floater motion, and/or from externally obtained wave information.

Obtaining the monitored parameter may comprise obtaining a signal indicative of position, tilting, deflection, and/or acceleration. A signal may be obtained from a motion sensor such as an acceleration sensor or a position sensor, and such signal may optionally be further processed. An acceleration sensor may for example be provided on top of a tower of the FWT, on or within the nacelle, on the rotor, on a rotor blade, and the like. Combinations of such sensors may be employed. Such sensors may facilitate detecting a failure of the FWT, such as by detecting a shock or vibration.

In an embodiment, modifying the operation of the protective function comprises modifying, in particular filtering, the monitored parameter and/or modifying the taking of the mitigation action, in particular modifying a triggering of the mitigation action. These are only exemplary modifications, and other modifications may be made depending on the implementation of the protective function. Preferably, both, a modification of the monitored parameter and a modification of the taking of the mitigation action are made. The influence of wave-induced motion of the FWT on the protective function may thereby be reduced efficiently.

For example, the protective function may trigger the mitigation action upon the monitored parameter exceeding a threshold. Modifying the operation of the protective function may comprise modifying the threshold based on the wave information. Such modification may prevent that the mitigation action is triggered due to wave-induced motion of the FWT. It may be modified in such way that values of the monitored parameter that are expected based on the wave information, such as wave height or sea state, or floater motion, do not trigger the mitigation action.

The modifying of the threshold may occur based on a type of a floating foundation of the FWT and/or based on a site of installation of the FWT. For example, the threshold may be modified differently for a semi-submersible floating foundation and for a spar-type floater, and it may optionally depend on the site of mooring. This may allow accounting for the differences in wave-induced motion for different types of floaters.

Modifying the threshold may comprise increasing the threshold for the monitored parameter if the wave information indicates a higher wave height and/or reducing the threshold for the monitored parameter if the wave information indicates a lower wave height. A triggering of the mitigation action may thus be prevented at higher waves, whereas the sensitivity for detecting a failure remains sufficiently high during calm sea conditions.

Modifying the threshold may for example comprise employing a function, a lookup table, or a neural network that provides the threshold as a function of the wave information. Each of these may for example return an adjusted threshold value when being provided with respective wave information, such as a sea state, a wave height, a heave motion, or the like.

Such function may for example comprise a linear function according to which the value of the threshold linearly depends on wave height, heave motion amplitude or the like. Such function may be composed of different parts; it may for example comprise a first part at lower wave heights for which the threshold is kept constant and may have one or more second parts for larger wave heights for which the threshold depends on the wave height. In such second part, the value of the threshold may linearly or non-linearly increase with increasing values of the wave information, such as wave height or amplitude of heave motion. Such function may in other embodiments comprise only one or more respective second parts, or may comprise one or more nonlinear parts, or any combination thereof.

Other ways of adjusting the threshold, such as using the above-mentioned lookup table or a neural network that provides the optimized threshold based on the current sea state, e.g. wave height, may also be employed.

The modifying of the protective function may comprise filtering the monitored parameter to filter out signal components caused by the wave-induced motion of the floating wind turbine. By removing such signal components from the monitored parameter, the triggering of the mitigation action due to wave-induced motion may become less likely. After the filtering, the remaining signal may mainly indicate accelerations that are due to the wind turbine operation, that may for example lie about a frequency range of a natural frequency of a wind turbine tower. The remaining signal may thus better represent accelerations that are due to a severe failure mode, such as blade loss or critical operation leading to higher fatigue. Sensitivity of the protective function may thus be maintained while reducing the number of triggering events due to wave-induced motion.

Filtering the monitored parameter may for example comprise deriving frequency information from the wave information. The frequency information may be indicative of one or more frequencies of the wave-induced motion of the floating wind turbine. It may further comprise filtering out frequency components of the monitored parameter that correspond to the derived frequency information.

A frequency analysis may for example be performed for the wave information, e.g. for wave height, for sea state, for floater motion, and/or the like. This may include transforming the respective signal into the frequency domain and identifying frequencies in the frequency domain, for example frequency contents above a certain threshold. In particular, a spectral range of the waves may be identified from the wave information, and such wave frequency range may be used for filtering the monitored parameter. The wave frequency range may in particular be filtered out of the monitored parameter.

Filtering the monitored parameter may for example comprise applying a band stop filter, a band-pass filter, a high-pass filter, a low-pass filter, a Kalman filter, and/or a notch filter to the monitored parameter. The stop band of the respective filter may correspond to the wave frequency range determined from the wave information.

Operating the protective function may then comprise comparing the filtered monitored parameter, e.g. the respective filtered signal, to a threshold and taking the mitigation action if the filtered monitored parameter exceeds the threshold.

As mentioned above, both, a modification of the threshold and a filtering of the monitored parameter may be employed, so that the filtered monitored parameter may be compared to a modified threshold. An unintentional triggering of the mitigation action due to wave-induced motion may thus be prevented even more effectively.

The wave information can be obtained from one or plural information sources, such as one or plural sensors and/or one or plural external sources. The wave information may thus comprise or be derived from one or a combination of a heave motion of a floater of the FWT, a pitch motion of the floater of the FWT, and/or a roll motion of the floater of the FWT. Wave height and/or a wave spectrum may be derived from each or from a combination of respective measurement values.

The protective function may be a shock and/or vibration sensing function. Detection of a severe failure of the FWT may thereby be facilitated. The FWT may for example be provided with a shock sensing device and/or vibration sensing device that implements the protective function.

The mitigation action may comprise at least one of a controlled shut-down of the FWT, an emergency shut-down of the FWT, or a changing of the FWT operation into a predetermined operating mode, such as a curtailed operating mode, an idling operating mode, and an active idling operating mode. These are only examples, and other mitigation actions are also conceivable.

The wind turbine may have a semi-submersible floating foundation or a spar-type floating foundation. Other floating foundations that allow a wave-induced motion of the FWT are also conceivable.

Although the description herein refers to sea state, it should be clear that a floating wind turbine may be installed both, on sea, in particular in an offshore environment, or in a lake.

According to a further embodiment, the method may further comprise generating, by the wind turbine, electrical power and/or electrical energy during operation; and transmitting at least a part of the generated electrical power and/or electrical energy to an electrical receiving arrangement. The electrical receiving arrangement may not be positioned in international waters, it may for example be positioned onshore and/or may be positioned within a 12-miles-zone of a respective sovereign national state over which the respective state has jurisdiction. The method further comprises supplying at least a part of the electrical power and/or of the electrical energy to an electrical utility grid, in particular to an onshore electrical utility grid. By such method, the loss of energy production due to a triggering of the mitigation action may be reduced, so that more energy may be supplied to the electrical utility grid.

According to a further aspect of the invention, a control system for controlling the operation of a floating wind turbine is provided. The floating wind turbine comprises a nacelle and a rotor mounted to a nacelle. The floating wind turbine is exposed to waves during operation, the waves causing a wave-induced motion of the floating wind turbine. The wind turbine is configured to operate a protective function, as described herein above. The control system is configured to perform a method according to any of the aspects, embodiments and examples described herein. By such control system, advantages similar to the ones outlined further above may be achieved.

The control system may further comprise any of the elements mentioned herein with respect to the method. It may in particular comprise one or more of the sensors mentioned herein, in particular a sensor providing a signal indicative of the monitored parameter (e.g., motion sensor measuring nacelle motion, in particular acceleration) and/or a sensor providing a signal indicative of the wave information (e.g., a motion sensor measuring floater motion).

According to a further aspect of the present invention, a wind turbine comprising a respective control system may be provided. In particular, the wind turbine comprises a tower having a longitudinal axis, a nacelle being mounted rotatably about a longitudinal axis of the tower to the tower, a rotor having at least one rotor blade, the rotor being rotatably supported by the nacelle, a generator being rotatable by the rotor for generating electrical energy, and a control system according to one of the precedingly described embodiments.

According to a further aspect of the invention, a computer program for controlling the operation of a floating wind turbine is provided. The computer program comprises control instructions which, when executed by a processing unit of a control system of the floating wind turbine, causes the processing unit to perform the method of any of the aspects, embodiments and examples disclosed herein. Such computer program, in particular the respective control instructions, may be provided on a volatile or non-volatile storage medium or data carrier, and/or may be provided via a communication connection, such as a wired or wireless network connection.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a floating wind turbine according to an embodiment.
Fig. 2 is a schematic drawing showing a floating wind turbine including a control system according to a further embodiment.
Fig. 3 is a schematic drawing showing control system according to an embodiment which may be used with the wind turbine of figure 1 or 2.
Fig. 4 is a diagram schematically illustrating acceleration of a nacelle of a FWT for different wind speeds and different sea states.
Fig. 5 is a diagram schematically illustrating heave motion of a floater of a FWT for different wave heights.
Fig. 6 is a diagram schematically illustrating modification of a threshold of a protective function of a FWT based on wave information.
Fig. 7 is a diagram schematically illustrating a spectrum of nacelle acceleration of a FWT.
Fig. 8 is a flow diagram illustrating a method of operating a FWT according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

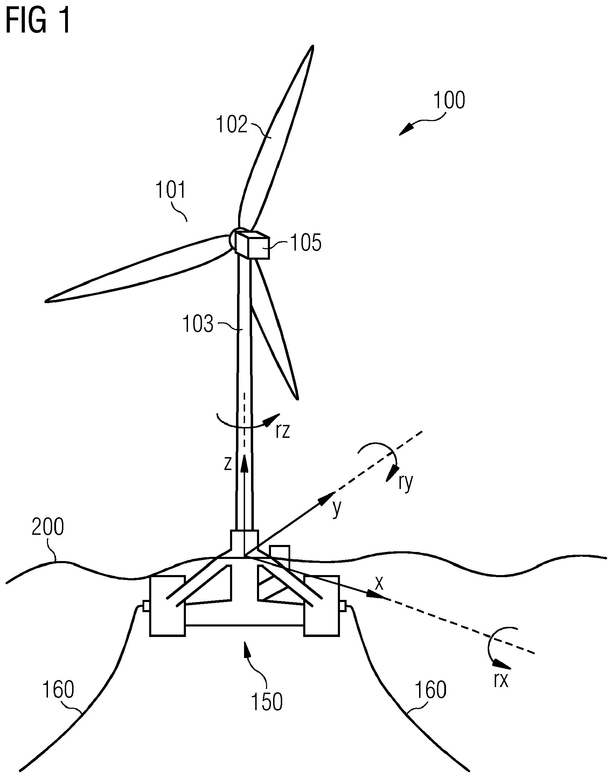

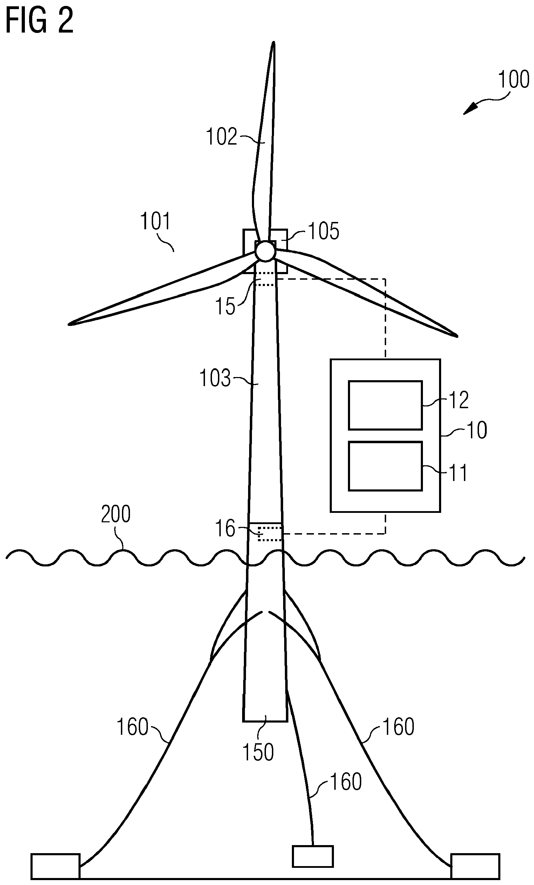

Fig. 1 schematically illustrates a floating wind turbine, FWT, 100 that may implement any of the methods and control systems disclosed herein. Wind turbine 100 includes a rotor 101 having rotor blades 102, a nacelle 105 to which the wind turbine rotor 101 is mounted and a tower 103 carrying nacelle 105. Other structures have been proposed for floating wind turbines, for example not comprising a tower, and these may likewise be employed with embodiments of the invention. Tower 103 is mounted to a floater 150 that supports the tower and ensures that nacelle 105 and rotor 101 stay above the sea surface 200. Floater 150 may be moored to the sea floor by mooring lines 160. In the present example, floater 150 is provided as a semi-submersible floating foundation, but it may be configured differently, as shown in Fig. 2.

Floater 150 moves with waves on sea surface 200. Such moored FWT may have six individual degrees of freedom (DOF), in particular the three translations in x-direction (surge), in y-direction (sway) and in z-direction (heave). The degrees of freedom may further include the three rotations shown in Fig. 1, namely the floater roll rx, the floater pitch ry, and the floater yaw rz. Floater yaw is not to be confused with turbine yaw, which is the rotation of the nacelle 105 with respect to tower 103. The waves experienced by FWT 100 have a high impact on accelerations experienced by the wind turbine nacelle 105. When floater 150 moves due to waves in accordance with its degrees of freedom, nacelle 105 experiences significant accelerations, also due to the lever effect of tower 103.

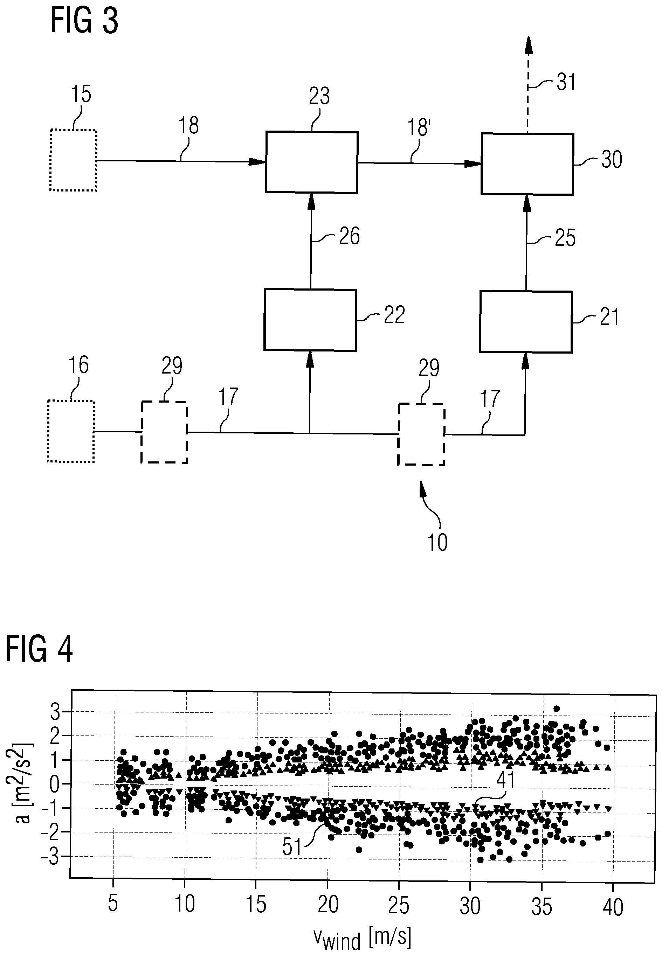

Fig. 4 shows a diagram that illustrates the effect of the sea state, and in particular of waves, on the nacelle acceleration for different wind speeds v_{wind}. The acceleration a is shown on the vertical axis of the diagram. The data points 41 (triangles) show the nacelle acceleration in y-direction (fore-aft movement) in calm sea conditions (without waves). The data points 51 (circles) show nacelle acceleration in y-direction for normal sea conditions, i.e. with waves of an average size. As can be seen, the waves cause a significant increase in the nacelle acceleration. The methods and control systems disclosed herein account for such acceleration, as described in more detail further below.

For more severe sea states, and in particular for increased wave heights, simulations have shown that the acceleration will even increase further. Accordingly, a protective function that employs the nacelle acceleration as an input parameter may trigger a protection mechanism, such as a wind turbine shut down, even though no wind turbine failure is present. Experiments have shown that a significant number of false alarms are detected by such protective function, leading to a high number of unnecessary activations and shutdowns that compromise the availability of the FWTs and that significantly affect energy production.

Fig. 2 shows a further exemplary implementation of wind turbine 100, wherein the floater 150 is provided in form of a spar-type floating foundation. Wind turbine 100 may again implement any of the methods and control systems disclosed herein. A control system 10 is exemplarily shown. Control system 10 may be arranged in nacelle 105, in tower 103, or in or on the floater 105, or at any other conceivable location. Control system 10 may include a processing unit 11 coupled to a memory 12. Processing unit 11 may be a micro-processor, a digital signal processor, an application-specific integrated circuit, or the like. Memory 12 may comprise RAM, ROM, Flash-Memory, a hard disk drive and other types of memory. Memory 12 may store control instructions which, when executed by processing unit 11, cause the control system 10 to perform any of the methods disclosed herein. Control system 10 may be distributed to plural controllers and may accordingly comprise plural processing units and plural memories. Control system 10 implements a protective function that obtains an monitored parameter, preferably an acceleration parameter, for example by obtaining a measurement signal from an acceleration sensor 15. Acceleration sensor 15 may be mounted in a top portion of tower 103, in or on nacelle 105, on the wind turbine rotor 101, or on any other location suitable to identify a shock, a vibration, or other accelerations that are indicating a failure of wind turbine 100. It should be clear that other types of measurements may as well be used in order to obtain a parameter that is indicative of the nacelle acceleration, such as position measurements, strain measurements, and the like. The acceleration sensor 15 or other type of sensor may form part of control system 10, or control system 10 may comprise an interface for receiving the monitored parameter, e.g. in form of a respective signal.

Control system 10 is further configured to obtain wave information that is indicative of waves (in particular on sea surface 200) to which the FWT 100 is exposed. Control system 10 may comprise a corresponding interface to receive such wave information from an external source, e.g. from a buoy, a floating vessel, one or more other floating wind turbines, or from a service, such as a weather service or another monitoring service that monitors the sea state. Control system 10 may comprise an interface to a sensor or may comprise a sensor that measures a signal indicative of respective waves. In the present example, a motion sensor 16 is provided on the floater 150 of FWT 100. However, sensor 16 may be located in tower, nacelle or any other conceivable location. Sensor 16 may be an acceleration sensor, a position sensor, a motion reference unit (MRU) or any other conceivable sensor that measures the movement of floater 150, which is mainly due to waves. Sensor 16 may for example be provided to measure the heave motion, the sway motion and/or the surge motion of the floater 150. The sensor may additionally or alternatively measure a rolling motion of the floater, such as rx, ry, and/or rz. Preferably, at least the heave motion is measured. A respective measurement signal may provide the wave information, or further steps, such as processing a respective measurement signal, may be performed by control system 10 to derive the wave information. For example, the measurement signal may be evaluated to derive the sea state, in particular wave height. In other implementations, the signal may directly be employed by control system 10.

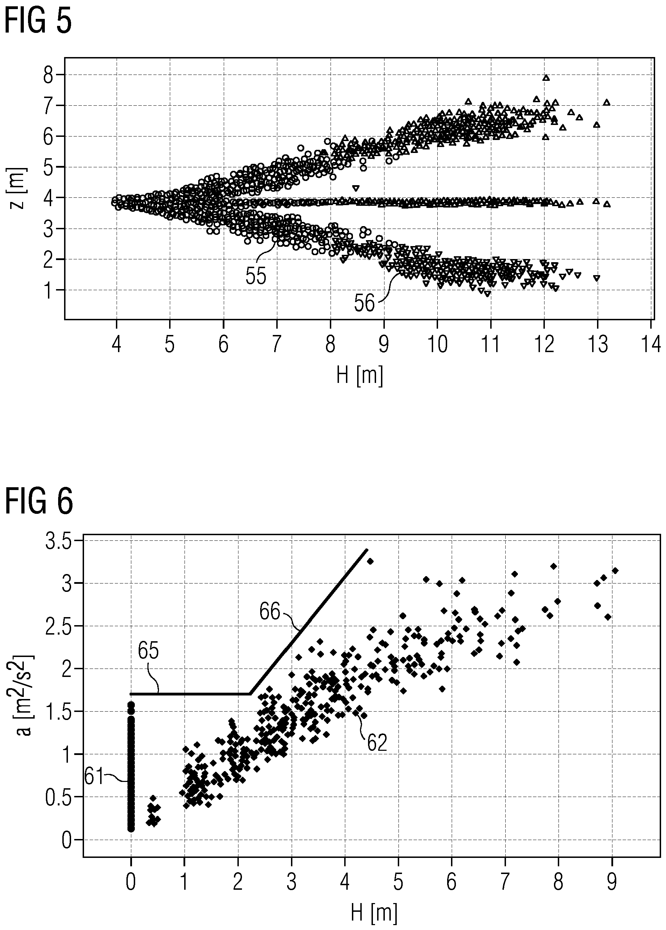

Fig. 5 is a diagram illustrating the relationship between wave height H shown on the horizontal axis and the heave motion z shown on the vertical axis for a semi-submersible floating foundation. Symbol z designates the peak-to-peak heave motion. Wave height H is measured as the difference between the elevations of a crest and a neighboring trough of the wave. Data points 55 (circles) correspond to a normal sea state (calm conditions) and data points 56 (triangles) correspond to a severe sea state. As can be seen, there is a clear relationship between wave height and heave motion, the relationship being almost linear. Accordingly, it is possible to derive from a measurement of the heave motion the wave height and/or an indication of the wave height, or vice-versa. Using a respective relationship thus allows the measurement of the floater motion using, e.g., sensor 16 and the determination of the sea state therefrom. It should be clear that different ways of measuring or determining wave height exist, and any of these may be employed here. For example, wave height may be determined as a mean value of the difference in elevation for a certain period of time, or may be determined as an average difference in elevation for a certain number of waves, or standardized values, such as the 'significant wave height' may be employed. The relationship between the heave motion (or other measure) and the respective wave height may be adapted accordingly, e.g. by calibration.

The relationship may depend on the type of floater; it may be different for a spar buoy floating foundation and for a semi-submersible floating foundation. The type of floater may thus be considered in a respective derivation, e.g. via calibration.

Turning back to Fig. 2, the measurement data obtained by control system 10 from sensor 16 is used to modify the protective function, as described in more detail further below. It should be clear that sensor 16 is optional. Respective wave information may also be obtained from an external data source, or may even be measured using sensor 15. However, providing a dedicated sensor 16 is preferred, as it may facilitate extracting information on the sea state from the measured data (which contributes much less to variations of the measurement signal of sensor 15) and may further provide real-time information at the position of FWT 100.

Fig. 3 is a schematic drawing illustrating a possible implementation of control system 10 that may be used in any of the FWTs of Figs. 1 and 2. Control system 10 communicates with or implements a protective function 30 that takes a mitigation action upon detecting a failure of the FWT 100, e.g. based on an monitored parameter 18 received from sensor 15. Control system 10 modifies the operation of the protective function 30 so as to reduce the influence of wave-induced motion of FWT 100. Control system 10 may implement one, two or more different ways of modifying of operation of protective function 30. In the present example, the input to the protective function 30 is modified, in particular by filtering, and the operation of the protective function 30 is modified, in particular by adjusting thresholds thereof. It should be clear that either one of these methods of modifying the protective function 30 may be used by itself, i.e. in isolation, and that further additional methods of modifying the operation of protective function 30 based on wave information may be used with embodiments of the invention.

Control system 10 may comprise or may be coupled to sensor 16 to receive wave information 17, or may comprise a communication interface to receive wave information 17 from another source. Wave information 17 may be a sea state, wave height or wave elevation, floater motion, or any other parameter suitable to indicate wave-induced motion of FWT 100. Such wave information 17 may directly be received from sensor 16 or from a respective communication interface, or may be derived by control system 10 from such received or measured data or signal. Control system 10 may for example comprise one or more optional information processing units 29 that may process a measurement signal received from sensor 16, such as a measurement of heave, sway, and/or surge motion of the floater, and that may derive there from a sea state, wave elevation, wave height or the like. A respective measurement signal may also be used directly as wave information 17.

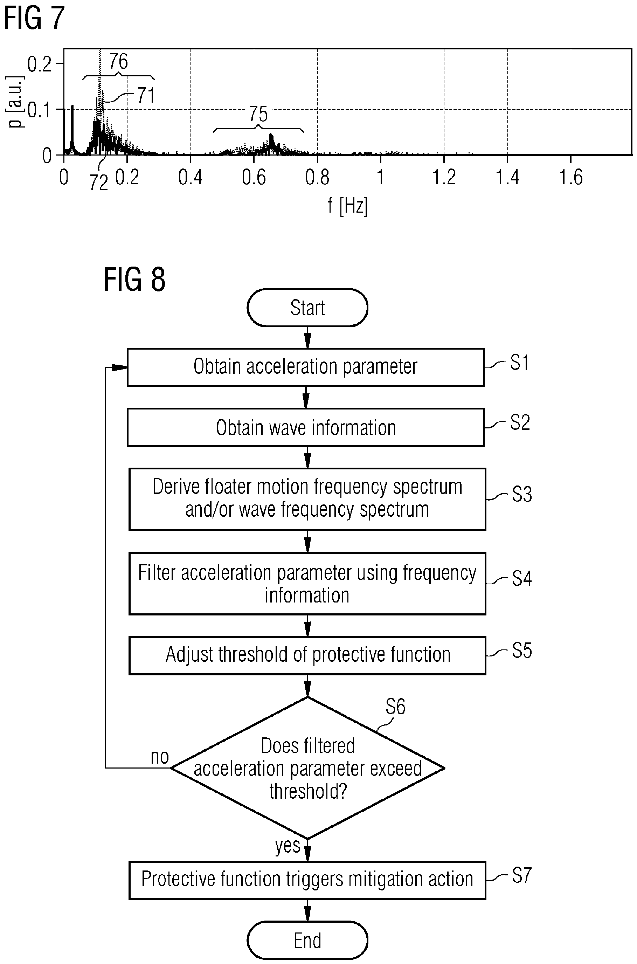

Control system 10 may further implement a threshold adjustment unit 21 configured to adjust a threshold of the protective function 30 based on wave information 17. This may occur as explained further below with respect to Figs. 6 and 8.

Control system 10 may further comprise a wave frequency identification unit 22 that identifies one or more frequencies, in particular a frequency range, of the waves to which FWT 100 is exposed, based on the wave information 17. Control system 10 may further comprise a filter 23, which may be an adaptive filter, that receives frequency information 26 from unit 22 and that filters the monitored parameter 18 in accordance therewith to derive a filtered monitored parameter 18'. Filter 23 may for example be a high-pass filter, a band-pass filter, a band-stop filter, a notch filter, and the like. Filter 23 may be configured to filter out the frequencies of the waves identified by unit 22. Filter 23 may thus be configured to adjust a range of frequencies that are filtered out of signal 18 based on the received frequency information 26. The cut-off frequency of a high-pass filter or the stop band of a band-stop filter, a band-pass filter, or a notch filter may be adjusted. A respective adjustment of filter 23 may occur continuously based on received updated frequency information 26, it may for example occur in real-time. In other implementations, the respective frequencies to be filtered out may only be set initially, for example based on frequency information corresponding to the most commonly encountered waves.

By modifying the input to protective function 30 and/or by modifying the operation of the protective function 30, e.g. by modifying a respective threshold, the influence of the wave-induced motion of FWT 100 on the protective function 30 can be reduced. This is explained in more detail further below with respect to Figs. 6 to 8.

Fig. 8 shows a flow diagram of a method that may be implemented by control system 10 of Fig. 3. In step S1, the monitored parameter is obtained, which may include measuring or receiving the monitored parameter 18 by/from an acceleration sensor 15 mounted to the tower top, the nacelle, the rotor, or any other suitable location of FWT 100. In step S2, wave information 17 is obtained, e.g. by directly measuring it using sensor 16, by further processing a respective measurement signal by information processing unit 29, by receiving the wave information from an external source, or the like. In step S3, frequency information 26 is derived by means of the wave frequency identification unit 22. This may include deriving a floater motion frequency spectrum (e.g., when receiving a respective floater motion measurement signal) and/or a wave frequency spectrum (e.g., when receiving a signal indicative of wave height or the like). A measurement signal indicating floater heave motion may for example be received. Frequency identification may involve transformation of a respective signal into the frequency domain, e.g. using a fast Fourier transformation (FFT), and identifying the dominant frequencies in such Fourier spectrum.

In step S4, the monitored parameter 18 is filtered by filter 23 using the frequency information 26. Fig. 7 is a diagram showing a frequency spectrum of the nacelle acceleration in y-direction (fore-aft) in curve 71 and in x-direction (side-side) in curve 72. The spectra are obtained by transforming respective measurement signals that form part of the monitored parameter 18 into the frequency domain. A natural frequency of a tower of the FWT 100 lies in a first frequency range 75 at about 0.6 Hz. A wind turbine failure causing shock or vibration may lead to an increase of the signal power in such frequency range 75. On the other hand, accelerations due to wave-induced motion of the FWT 100 lie in the second frequency range 76, for example in a range of 0.1 to 0.3 Hz. This frequency range 76 can be identified by unit 22 and the respective frequency information 26 is provided to filter 23. Filter 23 can thus filter the acceleration signal 18 to filter out signal components lying within this second frequency range 76 corresponding to wave-induced motion. The filtered signal 18' will thus better represent signal components that are valuable for failure detection. Removing of the signal components within frequency range 76 will reduce the events of a false triggering of the mitigation action.

Additionally or alternatively, the control system 10 may adjust in step S5 a threshold of protective function 30 based on the wave information by means of the threshold adjustment unit 21. The wave information 17 may comprise wave height, and unit 21 may adjust the threshold based on wave height. The threshold may be a threshold for triggering the mitigation action. The mitigation action may be triggered when the monitored parameter 18 or 18' (if filter 23 is present) exceeds the threshold.

Fig. 6 is a diagram illustrating a respective example of data obtained for monitored parameter 18 (unfiltered), in particular for an acceleration parameter, and of the adjustment of a threshold of protective function 30. In Fig. 6, the horizontal axis indicates the wave height (crest to trough) in meters and the vertical axis indicates the nacelle acceleration. Data points 61 (circles) indicate the range of nacelle accelerations encountered during normal wind turbine operation when no waves are present (wave height zero). As can be seen, during normal operation with no waves, the accelerations reach a maximum value. A protective function 30 may thus use a constant threshold 65 laying above the accelerations expected during normal operation. If the threshold 65 is exceeded, presence of a failure of FWT 100 is assumed and the mitigation action is triggered.

Data points 62 (diamonds) indicate the nacelle acceleration when waves of different height are encountered, i.e. for different sea states, and normal operating conditions of the FWT 100. Although no failure state is present, the nacelle accelerations exceed the fixed threshold 65. Unit 21 thus adapts the threshold in dependence on the wave information. As an example, a threshold 66 may be employed that changes with the sea state, in particular with wave height. The present embodiment employs a linear function according to which the threshold changes linearly with wave height. The threshold is placed such that the accelerations experienced at the respective wave height during normal operation lie below the threshold 66. Unit 21 may for example implement a respective function or a look-up table that provides the threshold signal 25 (Fig. 3) in dependence on the wave information 17. As shown in Fig. 6, a respective threshold function may be composed of different sections for different wave heights. For example, a constant threshold 65 may be used to a threshold wave height, and a linearly increasing threshold 66 may be used for larger wave heights. Other implementations are conceivable. For example, no constant threshold 65 may be provided, or plural sections of a linearly increasing threshold 66 may be provided and may have different slopes, or the threshold may non-linearly depend on the wave height. In even other implementations, a more complex functionality may be implemented in unit 21, such as a neural network that returns an optimal threshold for the received wave information.

Although Fig. 6 shows the adjustment of the threshold as a function of wave height H, other types of wave information may be employed. For example, the threshold may be adjusted directly as a function of measured floater motion, e.g. as a function of a measured amplitude (peak-to-peak) of floater heave motion. No information processing unit 29 may thus be provided. Also, it should be clear that such adjustment can be performed irrespective of the way in which the wave height is determined, as it is merely a matter of calibration and would only result in a different scaling of the horizontal axis of the diagram.

Turning back to Fig. 8, the protective function 30 checks in step S6 if the monitored parameter (18 or 18') exceeds the respective (adjusted) threshold. If this is not the case, the method may return to step S1 and may continue to monitor the monitored parameter and the wave information. If the threshold is exceeded in step S6, the protective function 30 triggers the mitigation action (step S7). Protective function 30 may issue control signal 31 for the mitigation action to a wind turbine controller, such as a shut-down signal or an emergency stop signal, depending on the implementation. Operation of the wind turbine may thus be stopped. Protective function 30 may for example be implemented as a shock sensing device and/or vibration sensing device that protects the wind turbine from further damage upon detecting abnormal operation. In other implementations, protective function 30 may be more complex and may detect a number of failures and may take different respective mitigation actions, such as changing the operating mode, reducing rotor speed, curtailing power output and the like.

Steps S3 and S4 are optional, and the method may only implement the adjustment of the threshold. In other implementations, step S5 is optional and the method may only filter the monitored parameter. By combining both, a reliable failure detection may be ensured while the rate of unnecessary triggering of the mitigation action may be reduced.

Several modifications are conceivable. For example, units 21 and 22 may use different signals. While unit 22 may directly use a measured floater motion, unit 21 may employ a wave height derived (by unit 29) from the measured floater motion. In other implementations, both units may use the same signal.

By the disclosed method and control system, the availability and performance of the FWT 100 may be increased. Further, OPEX may be reduced, since the number of manual resets of the FWT may be reduced. Significant advantages may thus be achieved.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A method of operating a floating wind turbine, FWT, wherein the floating wind turbine (100) comprises a nacelle (105) and a rotor (101) mounted to the nacelle (105), wherein the floating wind turbine (100) is exposed to waves during operation, the waves causing a wave induced motion of the floating wind turbine (100), wherein the floating wind turbine (100) is configured to operate a protective function (30), wherein operating the protective function (30) comprises obtaining a monitored parameter (18) indicative of an acceleration of the nacelle, of a tower top, and/or of the rotor of the floating wind turbine (100) and taking a mitigation action based on the obtained monitored parameter (18), wherein the method comprises:
obtaining wave information (17) indicative of the waves to which the floating wind turbine (100) is exposed; and
modifying the operation of the protective function (30) using the obtained wave information (17) to reduce an influence of the wave induced motion of the floating wind turbine (100) on the protective function (30).

2. The method according to claim 1, wherein obtaining the wave information (17) comprises obtaining measurements from a sensor (16) mounted to the floating wind turbine (100) and/or obtaining the wave information from an external source.

3. The method according to claim 1 or 2, wherein obtaining the wave information comprises one or a combination of:
obtaining measurements from a motion sensor (16) mounted to the floating wind turbine (100);
obtaining measurements from a motion sensor mounted on a vessel, buoy, or platform external to the floating wind turbine (100);
obtaining wave information from a wave radar; and
obtaining information on wave conditions from a weather service or monitoring service.

4. The method according any of the preceding claims, wherein the wave information (17) is indicative of a wave induced motion of a floater (150) of the floating wind turbine (100), of a sea state, and/or of a wave height, and/or wherein obtaining the wave information comprises estimating a sea state or wave height from a received measurement of motion of a floater (150) of the floating wind turbine, and/or wherein obtaining the wave information comprises estimating a wave induced motion of a floater (150) of the floating wind turbine (100) from a received sea state or a received wave height.

5. The method according any of the preceding claims, wherein modifying operation of the protective function (30) comprises modifying, in particular filtering, the monitored parameter (18) and/or modifying the taking of the mitigation action, in particular modifying a triggering of the mitigation action.

6. The method according any of the preceding claims, wherein the protective function (30) triggers the mitigation action upon the monitored parameter (18) exceeding a threshold (65, 66), wherein modifying the operation of the protective function (30) comprises modifying the threshold (66) based on the wave information (17).

7. The method according to claim 6, wherein modifying the threshold comprises increasing the threshold for the monitored parameter if the wave information indicates a higher wave elevation and/or reducing the threshold for the monitored parameter if the wave information indicates a lower wave elevation.

8. The method according to claim 6 or 7, wherein modifying the threshold (66) comprises employing a function, a look up table, and/or a neural network that provides the threshold (66) in dependence on the wave information (17).

9. The method according any of the preceding claims, wherein modifying the protective function (30) comprises filtering the monitored parameter (18) to filter out signal components caused by the wave-induced motion of the floating wind turbine (100).

10. The method according to claim 9, wherein filtering the monitored
parameter (18) comprises deriving frequency information (26) from the wave information (17), wherein the frequency information (26) is indicative of one or more frequencies of the wave induced motion of the floating wind turbine (100), and filtering out frequency components of the monitored parameter (18) that correspond to the derived frequency information (26).

11. The method according to claim 9 or 10, wherein filtering the monitored parameter (18) comprises applying a band-stop filter, a band-pass filter, a high-pass filter, a low-pass filter, a Kalman filter, and/or a notch filter to the monitored parameter (18).

12. The method according any of the preceding claims, wherein the
protective function (30) is a shock and/or vibration sensing function.

13. The method according any of the preceding claims, wherein the
mitigation action comprises at least one of a controlled shutdown of the floating wind turbine (100), an emergency shutdown of the floating wind turbine (100), or changing wind turbine operation into a predetermined operating mode, such as a curtailed operating mode, an idling operating mode, and an active idling operating mode.

14. A control system for controlling the operation of a floating wind
turbine, FWT, wherein the floating wind turbine (100) comprises a nacelle (105) and a rotor (101) mounted to the nacelle, wherein the floating wind turbine (100) is exposed to waves during operation, the waves causing a wave induced motion of the floating wind turbine (100), wherein the wind turbine (100) is configured to operate a protective function (30), wherein operating the protective function (30) comprises obtaining a monitored parameter (18) indicative of an acceleration of the nacelle, of a tower top, and/or of the rotor of the floating wind turbine (100) and taking a mitigation action based on the obtained monitored parameter (18), wherein the control system (10) is configured to perform the method of any one of the preceding claims.

15. A computer program for controlling the operation of a floating wind
turbine, FWT, wherein the floating wind turbine (100) is configured to operate a protective function (30), wherein operating the protective function (30) comprises obtaining a monitored parameter (18) indicative of an acceleration of a nacelle, of a tower top, and/or of a rotor of the floating wind turbine (100) and taking a mitigation action based on the obtained monitored parameter (18), wherein the computer program comprises control instructions which, when executed by a processing unit (11) of a control system (10) of the floating wind turbine (100), causes the processing unit (11) to perform the method of any of claims 1-13.
